# EUROPEAN PATENT APPLICATION

(11) **EP 1 675 028 A2**
(43) Date of publication of application: **28.06.2006**
(21) Application number: 05027229.3
(22) Date of filing: 13.12.2005
(51) Int. Cl.: G06F 21/00, H04L 29/00, G11B 19/00

(54) **Viewing limitation setting method**

(30) Priority: 21.12.2004 JP 2004369948
(71) Applicant: Funai Electric Co., Ltd., Daito-shi, Osaka (JP)
(72) Inventor: Ryuji, Ikeda Funai Electric Co,. Ltd, Daito-shi Osaka (JP)
(74) Representative: Grünecker, Kinkeldey, Stockmair & Schwanhäusser Anwaltssozietät

(57) **Abstract**

A method is for setting viewing limitation for selecting a viewing limitation mode from among a plurality of types of viewing limitation modes for reproducing on a reproducing device an audio/visual information recorded on an information recording medium. The method includes: displaying a first screen on a monitor for allowing a user to input a password; verifying the password input by the user; displaying a second screen on the monitor for allowing the user to select a desired viewing limitation mode from among the plurality of types of viewing limitation modes, when the password input by the user is verified.

## Description

### BACKGROUND OF THE INVENTION

### Field

The present invention relates to a viewing limitation setting method for performing viewing limitation during reproduction of audio/visual (AV) information recorded on a recording medium such as a DVD (Digital Versatile Disc), and more particularly to a viewing limitation setting method capable of simplifying an input operation when setting the viewing limitation such as TVG (Television Guardian) and parental locking.

### Description of the Related Art

In order to perform the viewing limitation for preventing children from watching a program not preferable from an educational point of view, a system according to a broadcast program, an optical disk player, and the like, is adopted.

In a digital broadcasting system, setting of parental information which is a type of the viewing limitation has been left to the side of a broadcast station.

Therefore, there is a problem that some settings of a reference value enable watching of the program for which viewing limitation is desired to watch, or limiting of the program for which the viewing limitation is not desired.

Thus, a digital broadcast receiver has been proposed for the purpose of obviating such an inconvenience (for example, see JP-A-2004-007415).

The conventional receiver previously stores, in a program information memory, program information inclusive of a parental value preset by a broadcast station and a self-parental value optionally set by a user for the programs broadcasted by the broadcast station.

And in broadcast reception, when viewing of a specific program is directed by the user, a program information monitoring unit reads out the program information of the specific program from the program information memory.

Next, a parental determining unit determines whether or not this specific program is a viewing-limited program on the basis of the program information of the specific program and reference value preset in the broadcast receiver.

Subsequently, according to the determination result, a control unit directs the permission/prohibition the specific program to pertinent units.

Thus, separately from the program viewing limitation on the side of the broadcast station, the program viewing limitation can be carried out according to the user's intention.

As for a player for playing the optical disk such as DVD, a recording medium player capable of setting a suitable parental level through a simple operation is known (for example, see JP-A-2002-325232).

The conventional recording medium player includes a storage unit, a parental level storage unit, an OSD display/output unit, a control unit, etc.

In setting a parental level, after a preset parental level and a parental level recorded in the recording medium have been outputted to the OSD display output section, the preset parental level is stored in the parental level storage unit.

And the recording medium is played at the parental level set on the basis of the parental level recorded in the recording medium.

Thus, since the parental level recorded in the recording medium can be easily confirmed, a suitable parental level can be set through a simple operation.

Further, a recording/reproducing device and method have been also proposed for the purpose of effectively showing the viewing limitation such as the parental locking (for example, see JP-A-2001-357611).

The above described recording/reproducing device and method previously store, in a viewing limitation memory, a non-rewritable serial number peculiar to a pertinent recording medium, a program (contents) and viewing limitation information correlated with the presence/absence of the viewing limitation setting.

And if the serial number of the storage medium set in playing agrees with the serial number stored in the viewing limitation memory, playing of the agreeing program is skipped. Further, in menu displaying, this program is omitted from display candidates.

Thus, since it is not known that the contents viewing-limited have been stored, the fact that the viewing limitation is being made during playing of the recording medium is not known to a third person.

Meanwhile, any of the techniques disclosed in JP-A-2004-007415, JP-A-2002-325232, and JP-A-2001-357611, requests a user to input a password.

Specifically, inputting of the password is required, respectively when the digital broadcast receiver disclosed in JP-A-2004-007415 sets/changes the self-parental value, when the recording medium player disclosed in JP-A-2002-325232 sets the parental level, and when the recording/reproducing device and method disclosed in JP-A-2004-357611 set the parental level.

And where the password is required, in any technique, the letter or sign urging the user to input the password is displayed on e.g. the screen of a monitor. Thereafter, if the input password agrees with the data of the password registered previously, setting or changing of the viewing limitation can be made.

Such entry of the password is also required for not only the parental level but also the TVG (term limitation) which has been recently adopted as a type of the viewing limitation in a disk player.

This TVG is set to exclude a specific term from the caption information included in the video signal of the AV information when the DVD with a movie and other recorded thereon is played by a player.

The object to be excluded includes a scene uttering discriminatory or violent terms and their voice, which will be cut during playing.

In this TVG setting also, the TVG and the letter or sign urging a user to input the password are displayed on the screen. And if this is verified, the TVG setting can be made.

In this way, in each setting of the parental level and TVG, the user must input the password according to the instructions displayed on the screen. This increases the number of times of an inputting operation to take time, thereby imposing a burden on the user.

### SUMMARY OF THE INVENTION

This present invention provides a viewing limitation setting method which can eliminate necessity of inputting a password for each setting of plural types of viewing limitation modes to simplify a setting operation, thereby alleviating the burden imposed on a user.

A method is for setting viewing limitation for selecting a viewing limitation mode from among a plurality of types of viewing limitation modes for reproducing on a reproducing device an audio/visual information recorded on an information recording medium. The method includes: displaying a first screen on a monitor for allowing a user to input a password; verifying the password input by the user; displaying a second screen on the monitor for allowing the user to select a desired viewing limitation mode from among the plurality of types of viewing limitation modes, when the password input by the user is verified.

### BRIEF DESCRIPTION OF THE DRAWINGS

In the accompanying drawings:
Fig. 1 is a block diagram showing an electric configuration of a disk player relative to the viewing limitation setting method according to an embodiment;
Fig. 2 is a screen view showing entries of a menu displayed on a monitor;
Fig. 3 is a screen view showing entries of an initial setting displayed on a monitor;
Fig. 4 is a screen view showing a password entry displayed on a monitor;
Fig. 5 is a screen view showing types of viewing limitation displayed on a monitor;
Fig. 6 is a screen view showing entries of TVG displayed on a monitor;
Fig. 7 is a screen view showing entries of a parental level displayed on a monitor; and
Fig. 8 is a flowchart for explaining the setting operations for viewing limitation.

### DETAILED DESCRIPTION

Now referring to the drawings, an explanation will be given of an embodiment of the viewing limitation setting method according to this invention.

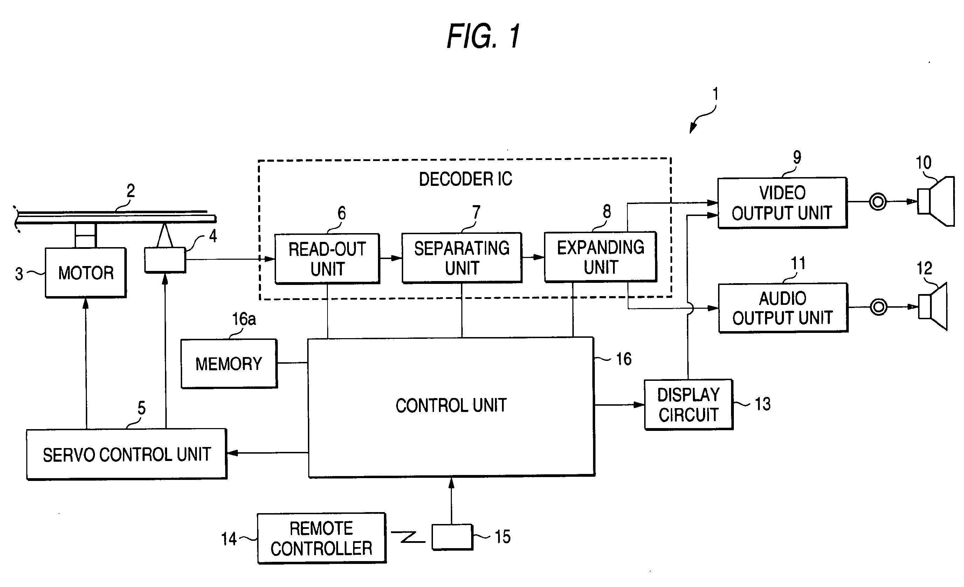

Fig. 1 is a block diagram showing an electric configuration of a disk player relative to the viewing limitation setting method according to an embodiment.

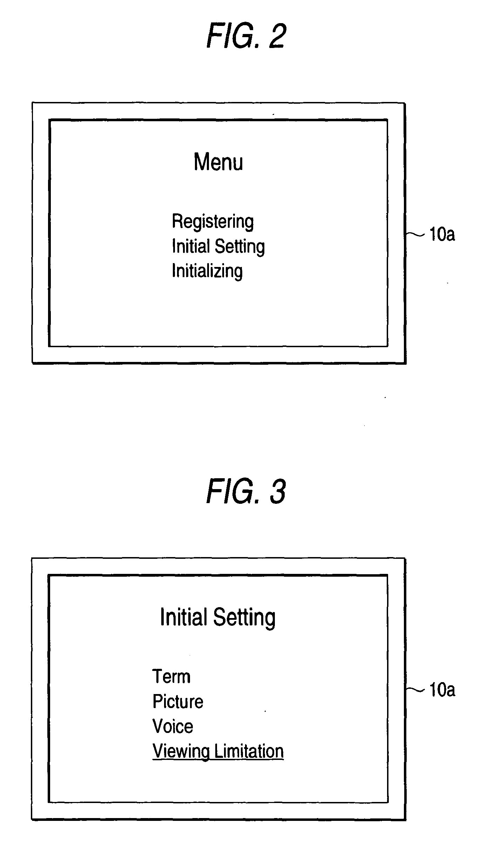

The disk player according to the embodiment is applied to a DVD player 1 which reproduces the recorded information on a DVD 2 through a key depressing operation on a remote controller 16 and displays a desired picture on a screen 10a of a monitor 10 shown in Fig. 2.

The DVD 2 is composed of a lead-in area, a user data area and a lead-out area. In the user data area, for example audio/ video information (AV information) is recorded.

The DVD 2 has previously entered addresses for indicating strict points (positions) on a spiral recording track when the AV information is written in the user data area as digital data. These addresses correspond to the time elapsing from a first recording position to a final recording position of the AV information.

And in the TOC region of the lead-in area, the recording positions of each chapter and each title are recorded as the address data corresponding to the elapsed time information from a recording starting position (first chapter of title number 1)

Therefore, when the data in this TOC region, the title number, chapter number, their recording starting and ending positions, details of recording times, etc., which have been recorded in the user data area of the recording track can be displayed on the screen 10a of the monitor 10. Further, the lead-in area is structured so as to record text data. The text data permit the information relative to the viewing limitation to be recorded in a sub-code. This sub-code is a control display signal recorded as digital data, and includes 8 (eight) channels of P, Q, R, S, T, U, V and W.

The channels of P and Q are used for the control and display in normal reproduction. The text data are recorded in the 6 (six) channels of R, S, T, U, V and W.

And when the DVD 1 is played back, the information read from the lead-in area is decoded and thereafter the text data recorded in the six channels are converted into character information represented in 8 bits.

Thus, several types of information relative to the viewing limitation can be displayed on the screen 10a of the monitor 10.

Incidentally, in the lead-out area, the data indicating that recording of the AV information has been completed are written.

In Fig. 1, reference numeral 3 denotes a motor for a driving system, which rotation-drives a tray placed on the DVD 2. Reference 4 denotes an optical pickup which sends out the information read from the track of the DVD 2 to a signal processing unit (not shown) through an RF amplifier.

This signal processing unit is connected to a read-out unit 6 and a control unit 16 and processes the above read information to be transferred to the respective units.

Incidentally, the motor 3 and optical pickup 4 are designed so that their operating speed is controlled by a servo control unit 5.

The read-out unit 6 sends out compressed AV data read out from the DVD 2 to a separating unit 7. The separating unit 7 separates the compressed AV data into a compressed video data packet and a compressed audio data packet which are transferred to an expanding unit 8.

The expanding unit 8 decodes the compressed video data packet and the compressed audio data packet obtained by the separating unit 7, respectively to be expanded to the original AV information.

These read-out unit 6, separating unit 7 and expanding 8 are constructed by a general decoder IC.

Further, reference numeral 9 denotes a video information output unit which is connected to a monitor 10 such as a television through a terminal. The video information output unit 9 converts the video data expanded by the expanding unit 8 into a color television signal in an NTSC or PAL system which is in turn outputted to be displayed on the screen 10a of the monitor 10.

Reference numeral 11 denotes an audio information output unit which is connected to a speaker 12 through a terminal.

The audio data expanded by the expanding unit 8 is sent out to speaker 12 to emit the voice.

Reference numeral 13 denotes a display circuit for OSD (On Screen Display) whose output is connected to the video information output unit 9. Under the display control by the control unit 16, the display circuit 13 supplies an OSD signal to the video information output unit 9 so that a menu and the contents of the viewing limitation mode set by password entry are displayed on the screen 10a of the monitor 10.

Reference numeral 14 denotes a remote controller. A body of the remote controller is provided with various operating keys for operating the DVD player 1.

Like a general remote controller, the remote controller 14 has the operating keys inclusive of a power key for turning on/off power, an open/close key for opening/closing a tray, ten keys, a menu key, a setting key, a determining key, cursor keys, etc.

The ten keys are assigned characters or signs for individual numeral keys. By mode changing, the entry of the password is permitted.

The menu key serves to produce a command for displaying the menu on the screen 10a. The setting key serves to produce a command for starting various settings. The determining key serves to produce a command for determining a selection entry displayed on the screen 10a according to the operation of the determining key 10.

The cursor keys also serve as function keys. The respective keys arranged up and down and left and right are assigned the functions of a play, stop, fast-forward and fast-return.

If any one of these cursor keys is depressed when the menu is displayed on the screen 10a of the monitor 10 by the menu key, the cursor on the screen 10a is moved to produce a command for selecting a desired entry.

When any key on the remote controller 14 constructed described above is depressed, the information corresponding to the operation contents is transmitted to the DVD player 1.

Reference numeral 15 denotes a receiving unit which receives an infrared signal transmitted from the remoter controller 14 and sends out the transferred signal to the control unit 16.

Reference numeral 16 denotes a control unit constructed of a microcomputer. The control unit 16 includes a memory 16a to control the operation of the entire DVD player 1. The control unit 16 is connected unidirectionally or bi-directionally to the respective parts of the circuit according to their functions.

In operation, the control unit 16 shifts to a mode corresponding to the command signal from the remote controller 16, and sends out the control signal to the servo control unit 5 to control the driving mechanism, thereby executing the various operations of normal playback, slow playback, fast-forward, fast-return and stop.

Further, the control unit 16 controls the operation of the above read-out unit 6, separating unit 7, expanding unit 8, etc. to read out the information recorded on the DVD 2, thereby displaying the image on the screen 10a of the monitor 10 and emitting the voice form the speaker 12.

Further, the control unit 16 is designed to control the display circuit 13 when the viewing limitation mode is set, thereby simultaneously displaying in parallel three types of settings of parental level, TVG and term replacement.

The memory 16a stores, in a data table in a predetermined area, data relative to the parental level, term limitation and term replacement which are the viewing limitation modes.

The parental level is a gradual limitation represented in numerical values such as ALL, 1, 2 and 3. "All" means the viewing limitation to all. The limitation level becomes more strict with an increase of the numerical value like 1, 2, 3.

The term limitation is the above TVG, which excludes the specific term(s) from the caption information contained in the video signal in the AV information (video/audio signal). For this term limitation, the data of selected terms are previously stored to permit the term limitation according to the mode, genre, etc. to be made.

Concretely, the term limitation includes a scene uttering discriminatory or violent terms, their voice, etc.

Further, the term replacement is to replace the specific terms to be term-limited of the above caption information by other terms. For this term replacement, the data of the terms corresponding to the pertinent terms are stored.

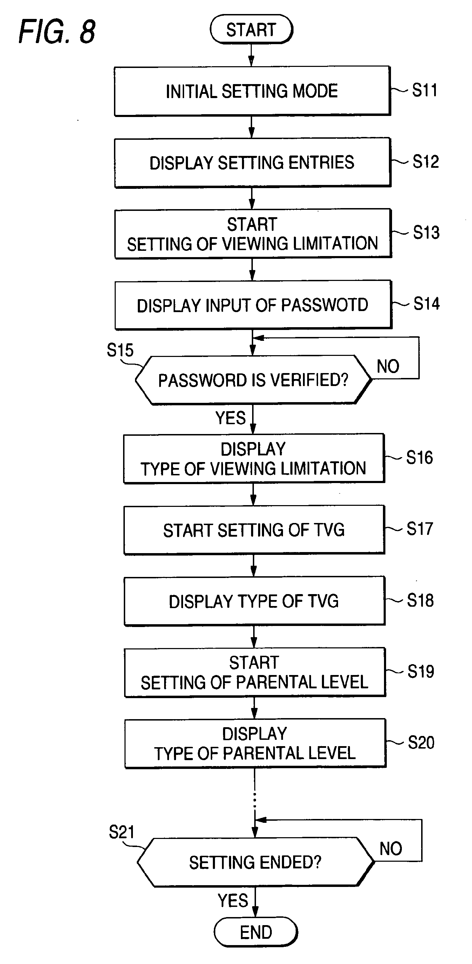

Next, referring to Fig. 8, an explanation will be given of the operation of the DVD player 1.

Where the user plays back the DVD 2, he or she previously makes setting of the viewing limitation for the DVD player 1.

First, the user turns on the power key of the remote controller 14 to start the playing of the DVD player 1. Subsequently, when the user operates the menu key, the control unit 16 controls the display circuit 13 on the basis of this command to display the menu on the screen 10a of the monitor 10.

This menu includes registering, initial setting, initializing, etc. as shown in Fig. 2 When the user selects the initial setting, the control unit 16 proceeds to the initial setting mode (step S11) and displays the initial setting entries such as the term, picture, voice and viewing limitation as shown in Fig. 3 (step S12).

Now, when the user selectively operates the viewing limitation, the control unit 16 starts the setting of the viewing limitation (step S13).

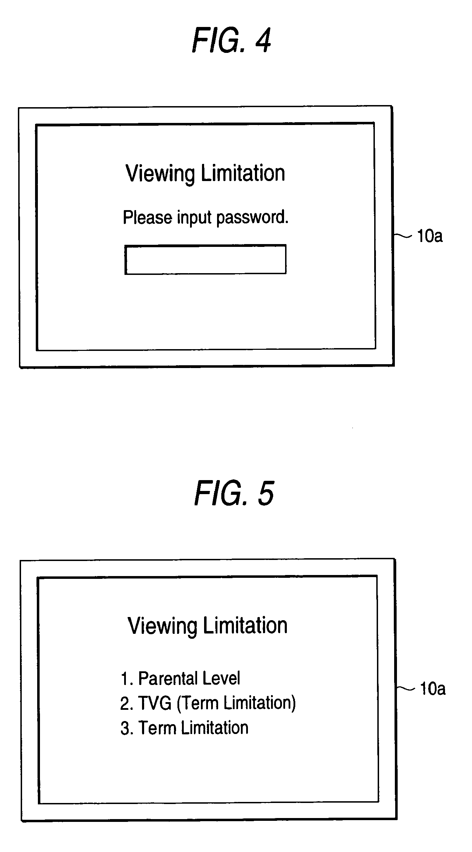

Then, a blank space as well as the letters such as the "viewing limitation" and "Please input your password" as shown in Fig. 4 is displayed (step S14).

When the user inputs his password, the control unit 16 determines whether or not the inputted password agrees with the password previously registered (step S15), i.e. is true.

If it is verified that the inputted password is true, the control unit 16, as shown in Fig. 5, displays, on the screen 10a, the type of the viewing limitation such as the parental level, TVG (term limitation) or term replacement (step S16).

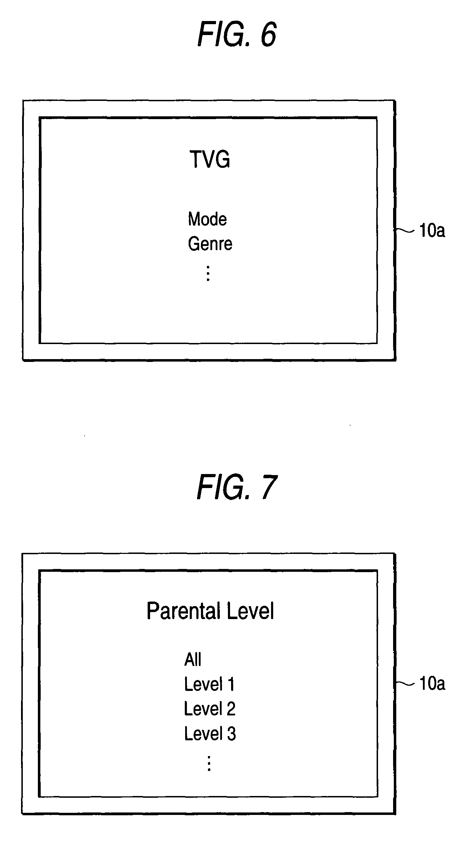

If the user selects the TVG, the control unit 16 starts the setting of the TVG (step S17), and displays the type such as the mode or genre (step S18) as shown in Fig. 6.

Thus, the user can easily set the viewing limitation of any type of the TVG.

On the other hand, when the user selects the parental level, the control unit 16 starts the setting of the parental level (step S19), and displays ALL and respective levels as a range of the viewing limitation as shown in Fig. 6 (step S20).

Correspondingly, if the user makes the selective operation, ALL or any parental level is set.

Incidentally, when the user selects the term replacement, the control unit 16 starts the setting of the term replacement so that although not shown, the level of the term replacement is displayed as the range of the viewing limitation. And the setting corresponding to the replacement level is made.

In this way, the user can easily make the viewing limitation of any one of the parental level, TVG and term replacement through the simple operation of inputting the password.

Subsequently, the control unit 16 determines whether or not the setting of the viewing limitation should be ended (step S21) . If a command of end of the setting is received, the series of setting operations are ended.

Thereafter, where the user plays back the DVD 2, he sets the DVD 2 in the tray and depresses the play key on the remote controller 14.

Then, the control unit 16 operates the servo control unit 5 so that pickup 4 reads the management information containing the text data from the lead-in area of the DVD 2.

When the information relative to the viewing limitation of the management information is supplied to the control unit 16, the control unit 16 reads the data of the viewing limitation mode previously stored in the memory 16a.

And the control unit 16 performs the viewing limitation to the reproduced voice sent out from the decoder IC to the voice output unit 11, according to the preset viewing limitation mode.

In this case, the viewing limitation is made according to the contents of the viewing limitation mode such as the parental level, TVG or term replacement.

As a result, by limiting inconvenient terms or replacing them by other terms for not only children but also adults, the resulting voice can be emitted from the speaker 12.

As described above with reference to the embodiment, after having displayed a sign for inputting a password on the screen, the control unit validates the inputted password and thereafter displays all the viewing limitation modes in parallel and also displays signs for selection to select any of them, thereby omitting a step of requesting entry of the password whenever the viewing limitation modes are individually set. Thus, unlike the conventional method, necessity of inputting a password for each setting of plural types of viewing limitation modes can be eliminated to simplify a setting operation, thereby alleviating the burden imposed on a user.

Further, since the viewing limitation modes includes a parental level control, term limitation and term replacement, in setting any of them, the password has only to be inputted once.

Further, since the specific term is defined according to determining standards for the term limitation and term replacement, respectively, and stored in a memory of the player as term data. Thus, the term suited to the degree of necessity of the viewing limitation can be optionally set.

Incidentally, the apparatus according to the present invention should not be limited to the embodiment described above, but can be modified within a scope not departing from the sprit of the present invention.

Although the present invention has been shown and described with reference to the embodiment, various changes and modifications will be apparent to those skilled in the art from the teachings herein. Such changes and modifications as are obvious are deemed to come within the spirit, scope and contemplation of the invention as defined in the appended claims.

## Claims

1. A method for setting viewing limitation for selecting a viewing limitation mode from among a plurality of types of viewing limitation modes for reproducing on a reproducing device an audio/visual information recorded on an information recording medium, the method comprising:
displaying a first screen on a monitor for allowing a user to input a password;
verifying the password input by the user;
displaying a second screen on the monitor for allowing the user to select a desired viewing limitation mode from among the plurality of types of viewing limitation modes, when the password input by the user is verified.

2. The method according to claim 1, wherein the plurality of types of viewing limitation modes include at least one of: a parental level that switches a level of parental control; a term limitation that excludes a specific term from a caption information contained in a video signal of the audio/visual information; and a term replacement that replaces the specific term from the above caption information by another term.

3. The method according to claim 2, wherein the specific term is defined according to determining standards for the term limitation and the term replacement, and stored in a memory provided in the reproducing device as term data.
